# EUROPÄISCHE PATENTSCHRIFT

(11) **EP 1 232 288 B1**
(45) Veröffentlichungstag und Bekanntmachung des Hinweises auf die Patenterteilung: **25.06.2003**
(21) Anmeldenummer: 00974544.9
(22) Anmeldetag: 16.11.2000
(51) Int. Cl.: C21C 5/52, C21B 13/14, F27D 17/00, F27D 13/00

(54) **VERFAHREN ZUM VORWÄRMEN UND ZUM KONTINUIERLICHEN EINBRINGEN EINER CHARGE IN EINEN ELEKTROLICHTBOGENOFEN**
METHOD FOR PRE-HEATING AND FOR CONTINUOUS INTRODUCTION OF A CHARGE FOR AN ELECTRIC ARC FURNACE
PROCEDE DE PRECHAUFFAGE ET D'APPORT EN CONTINU D'UNE CHARGE DANS UN FOUR A ARC ELECTRIQUE

(30) Priorität: 25.11.1999 DE 19956578
(43) Veröffentlichungstag der Anmeldung: 21.08.2002
(73) Patentinhaber: SMS Demag AG, 40237 Düsseldorf (DE)
(72) Erfinder: GERMERSHAUSEN, Thomas, 40882 Ratingen (DE); DEPPNER, Karl-Heinz, 46562 Voerde (DE)
(74) Vertreter: Valentin, Ekkehard, Dipl.-Ing.
(86) Internationale Anmeldenummer: EP0011321
(87) Internationale Veröffentlichungsnummer: WO01038589

(56) Entgegenhaltungen:
- EP-A- 0 890 809
- WO-A-99/28513
- US-A- 4 101 313
- PATENT ABSTRACTS OF JAPAN vol. 1999, no. 02, 26. Februar 1999 (1999-02-26) -& JP 10 300366 A (DAIDO STEEL CO LTD), 13. November 1998 (1998-11-13)

## Beschreibung

Die Erfindung betrifft ein Verfahren zum Vorwärmen und zum kontinuierlichen Einbringen einer Charge in einen Elektrolichtbogenofen (EAF).

Hot Briquetted Iron (HBI ) ist die kompaktierte Form von Direct Reduced Iron (DRI), d. h. von Eisenschwamm bzw. von reduziertem Eisenfeinerz. HBI enthält wie DRI im Vergleich zu Schrott nur geringste Anteile von schädlichen Eisenbegleitelementen (Cu, Pb, Zn, etc.), aber einen signifikanten Anteil von Gangart (SiO2) und nicht reduziertem Eisen (Fe203/Fe304).

Dem Vorteil der Nutzung von HBI als Einsatzmaterial zur Stahlherstellung im Elektrolichtbogenofen (EAF), nämlich sauberes Einsatzmaterial mit definierter chemischer Zusammensetzung stehen folgende Nachteile gegenüber, nämlich
- ein erhöhter Energieaufwand durch die Notwendigkeit zur Endreduktion der nicht reduzierten Fe-Bestandteile,
- Schmelzen der Gangart sowie erhöhter Kalkeinsatz zur Kompensation des Si02Gehalte der Gangart.

Die Nachteile des Einsatzes von HBI im EAF können durch die Nutzung der chemischen und fühlbaren Wärme des Abgases des EAF-Prozesses in einem Schrott-Vorwärmschacht kompensiert werden. Durch den Einsatz von aufgeheiztem HBI kann analog zum aufgeheizten Schrott mit einer erheblichen Energieeinsparung und Verkürzung der Prozesszeit im EAF gerechnet werden. Kritisch ist hierbei, dass das HBI in der oxidierenden Atmosphäre des EAF-Abgasstromes zur Rückoxidation neigt. Diese Rückoxidation und die dann erforderliche weitere Reduktion kann die eventuellen Einsparungen der Aufheizung kompensieren. Aufgrund fehlender Daten in Literatur und Praxis ist es zur Zeit nicht möglich, das Ausmaß der Rückoxidation abzuschätzen und somit eine realistische Prozesskalkulation vorzunehmen.

Ein weiteres Problemfeld des Einsatzes von HBI im EAF ist die Art des Chargierens. HBI bzw. DRI ist nicht geeignet, um - analog zum Schrotteinsatz - als großer Anteil der Gesamtcharge über einen Schrottkorb In den EAF eingesetzt zu werden. Dies ist durch die - im Vergleich zum Schrott schlechte Wärmeleitfähigkeit dieses Materials bedingt, die bei einer großen Schüttung in der Schmelze eines EAF zu unerwünschter "Eisbergbildung" führt, die den Einschmelzvorgang wesentlich behindert. Aus diesem Grund müssen HBI bzw. DRI über Vorhaltebunker und Förderanlagen durch ein Deckelloch kontinuierlich in den EAF chargiert werden.

Ein Vorwärmverfahren für HBI muss also neben der eigentlichen Vorwärmung des Materials auch über ein geeignetes kontinuierliches Chargierverfahren verfügen.

Vorwärmverfahren und hierfür geeignete Vorrichtungen für das Vorwärmen von Schrott im Rauchgasstrom eines Elektrolichtbogenofens sind bereits bekannt. So wird in der US-A-4 101 313 ein Verfahren beschrieben, bei dem die Schrottcharge eines Elektrolichtbogenofens in zwei oberhalb des Elektrolichtbogenofens übereinander angeordneten Drehrohröfen vorgewärmt wird. Im oberen Drehrohrofen erfolgt die Vorwärmung im Gleichstrom mit dem Rauchgasstrom des Elektrolichtbogenofens unter Zusatz von Sauerstoff oder Luft. Im zweiten darunter angeordneten Drehrohrofen wird die Vorwärmung weiter fortgeführt, wobei die Beheizung der Schrottcharge fast ausschließlich mit Fremdenergie durch einen Brenner erfolgt.

In der WO-A-99/28513 wird ein Verfahren zur Schrottvorwärmung im Rauchgasstrom eines Elektrolichtbogenofens beschrieben. Die Vorwärmung wird in einem neben dem Elektrolichtbogenofen angeordneten vertikalen Vorwärmschacht im Gleichstrom mit dem Rauchgas durchgeführt. Zur Reduzierung brennbarer gasförmiger Schadstoffe, die im Rauchgas noch enthalten sind und solcher, die mit dem Schrott in den Vorwärmschacht eingebracht werden, wird im Vorwärmschacht mittels Brenner mit einem regelbaren Brennstoffsauerstoff-Verhältnis eine vollständige Nachverbrennung dieser Schadstoffe durchgeführt.

Zur Klärung der Frage, wie sich HBI beim Aufheizen in oxidierender Atmosphäre verhält, wurden Versuche mit folgenden Parametern gefahren:
Atmosphäre: Luft
Versuchstemperaturen: 900 / 1100 / 1300 °C
Verweilzeit: 15 / 30 / 60 min

Ein Einsatz in Luft stellt den "worst case" an oxidierender Atmosphäre dar und lässt somit eine Abschätzung für das Rückoxidationsverhalten in Rauchgasatmosphären zu, die im Schrottvorwärmschacht vorherrschen. Während der Versuchsdurchführung zeigte sich, dass die HBI-Briketts innerhalb von ca. 7 min. im Brikett-Kern auf Umgebungstemperatur aufgeheizt wurden. Augenscheinlich traten bei 900 und 1100 °C Versuchstemperatur keine Zerfallserscheinungen an den HBI-Briketts während der Versuchsdurchführung auf; bei 1300 Grad C Versuchstemperatur zeigten sich oberflächliche Oxidationserscheinungen, die zu Materialablösungen führten.

Die Analyseergebnisse zeigen, dass in Abhängigkeit von Temperatur und Verweilzeit der ursprüngliche Gehalt an Fe-met von 88 % auf bis zu 66 % bei 1300 °C und 60 min Verweilzeit absinkt.

Für eine Abschätzung des Einsatzes in einem realistischen Schrottvorwärmer (angelehnt an das SMS-Schrottvorwärmverfahren VERTICON) ist jedoch eine Verweilzeit von 45 min und eine Aufheiztemperatur von 900 °C mit einem Fe-met Gehalt von ca. 82 % zur weiteren Betrachtung einer Prozessberechnung heranzuziehen.

Eine erste theoretische Prozesskalkulation am Beispiel eines 1 00 t AC-EAF mit 70 MVA Transformatorleistung bei 90 % HBI Einsatz, hier mit 4,3 % C-Gehalt gerechnet, ergaben eine Verringerung der tap-to-tap-time von ca. 24 % und eine Verringerung des elektrischen Energieeinsatzes von ca. 28 %. Hier sollten nur die relativen Werte und nicht die absoluten Beträge - die für jede Prozesskalkuiation spezifisch sind - betrachtet werden.

Nach den ermutigenden Erfahrungen der Voruntersuchungen ergab sich für die Erfindung die Aufgabe, ein Verfahren zum Vorwärmen und zum kontinuierlichen Einbringen einer DRI-Charge, vorrugsweise einer heißbrikettierten DRI-Charge in einen EAF anzugeben.

Die Aufgabe wird gelöst durch die kennzeichnenden Merkmale des Anspruchs 1. Die Vorwärmung durch Rauchgas aus dem EAF verringert den elektrischen Energieeinsatz und verkürzt die Schmelzzeit. Die im Gleichstrom erfolgende Aufheizung der Charge führt zu optimalen Vorwärmergebnissen. Die Kontrolle des Sauerstoffgehaltes der Rauchgase begrenzt die Rückoxidation der Charge. Zum Vorwärmen der Charge dient ein in der Nähe des EAF aufgestellter, vertikaler Vorwärmschacht, der von oben befüllbar und mit Schwerkrafttransport der Charge betreibbar ist. Sein oberes Ende ist mit dem EAF, sein unteres Ende mit einer Unterdruckquelle, z. B. einem Gebläse, in Strömungsverbindung. Daraus folgt die Gleichstromvorwärmung der Charge. Der Gasbrenner gestattet durch Wahl seiner Luftüberschusszahl eine Einstellung des Sauerstoffgehaltes der Rauchgase auf einen für den Schmelzprozess von HBI und DRI optimalen Wert.

Dadurch, dass im Vorwärmschacht Einbauten zum Steuern des Schwerkrafttransport der Charge vorgesehen sind, kann deren Aufheizzeit im Vorwärmschacht bestimmt werden.

Von Vorteil ist, dass unterhalb des Vorwärmschachts ein zu diesem geöffnetes Transportrohr angeordnet ist, das in den EAF oberhalb der Schmelze mündet und einen Transportschieber aufweist, der zwischen Vorwärmschacht und EAF hin- und herschiebbar ist. Auf diese Weise wird die Charge in kleinen Mengen quasi kontinuierlich in den EAF gefördert. Dadurch wird die Anhäufung von nicht geschmolzenem Material (die sogenannte Eisbergbildung) verhindert.

Von Vorteil ist auch, dass das Transportrohr zum EAF hin ansteigen kann und an seiner Mündung einen Verschluss aufweist. Das Ansteigen des Transportrohrs bewirkt eine ausschließliche und damit kontrollierte Förderung der Charge durch den Transportschieber. Die verschließbare Mündung stellt sicher, dass die Rauchgase des EAF nur durch die Verbindungsleitung zum oberen Ende des Vorwärmschachts entweichen können.

Dadurch, dass der Vorwärmschacht durch einen Schrägaufzug dosiert beschickbar ist, kann das Chargieren weitgehend automatisiert werden.

Weitere Merkmale der Erfindung ergeben sich aus dem Patentanspruch, der folgenden Beschreibung und der einzigen Zeichnung, in der ein Ausführungsbeispiel der Erfindung schematisch dargestellt ist.

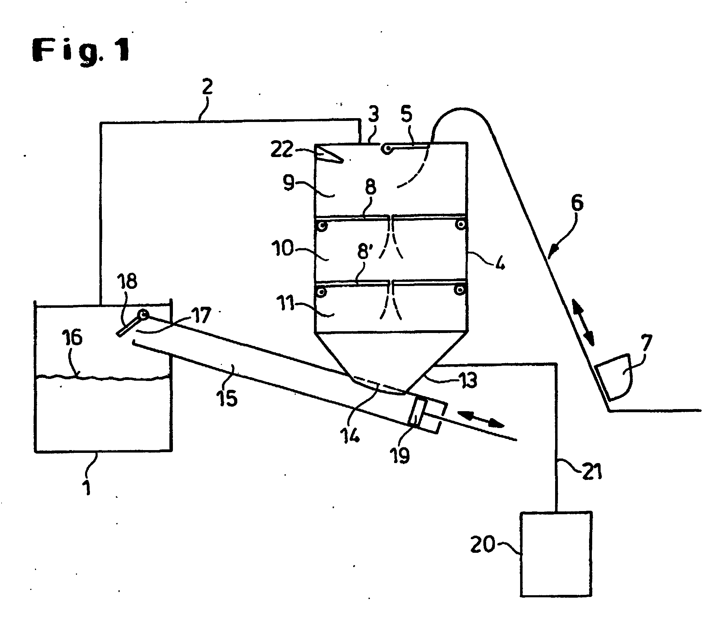

Figur 1 zeigt einen Elektrolichtbogenofen (EAF) 1, der über eine erste Verbindungsleitung 2 mit dem oberen Ende 3 eines Vorwärmschachts 4 in Strömungsverbindung steht. Am oberen Ende 3 ist außerdem ein Einfülldeckel 5 für die Charge vorgesehen, die dorthin von einem Vorratslager aus durch einen Schrägaufzug 6 mit einem Ladewagen 7 befördert wird.

Im Vorwärmschacht 4 sind Einbauten in Form von Schwenkrosten 8, 8' angeordnet, auf die die Charge abgelegt und nach erfolgter Erwärmung in zwei Stufen weitergegeben wird.

Die Schwenkroste 8, 8' unterteilen den Vorwärmschacht 4 in eine erste Kammer 9, eine zweite Kammer 1 0, und eine dritte Kammer 11. Letztere läuft in das konische untere Ende 13 des Vorwärmschachts 4 aus, das in einer Öffnung 14 eines Transportrohres 15 mündet. Dieses wiederum mündet in den EAF 1 oberhalb des Schmelzspiegels 16. Das Transportrohr 15 kann zum EAF 1 hin ansteigen und weist an seiner Mündung 17 einen Verschluss 18 auf. Am mündungsfemen Ende des Transportrohres 15 befindet sich ein Transportschieber 19, der zwischen Vorwärmschacht 4 und EAF 1 hydraulisch hin- und herschiebbar ist.

Das untere Ende 13 des Vorwärmschachts 4 und eine Unterdruckquelle 20 im Regelfall ein Gebläse, sind über eine zweite Verbindungsleitung 21 in Strömungsverbindung. In die Kammer 9 mündet ein regelbarer Gasbrenner 22.

### Die Vorrichtung funktioniert folgendermaßen:

Die Charge, vorzugsweise HBI und DRI, wird durch den Ladewagen 7 des Schrägaufzuges 6 über den Einfülldeckel 5 auf den ersten Schwenkrost 8 der ersten Kammer 9 des Vorwärmschachts 4 gelagert. Aus dem EAF 1 strömt Rauchgas über die erste Verbindungsleitung 2 zum oberen Ende 3 des Vorwärmschachts 4 in dessen ersten Kammer 9. Von dort strömt das Rauchgas weiter über die Schwenkroste 8, 8' zur zweiten und dritten Kammer 10 und 11 und zum unteren Ende 13 des Vorwärmschachts 4 und über die zweite Verbindungsleitung zur Unterdruckquelle 20. In der ersten Kammer 9 wird von dem Gasbrenner 22 mehr oder weniger stark reduzierendes Abgas zugegeben, um den Sauerstoffgehalt der Rauchgase auf einen gewünschten, niedrigen Wert einzustellen. Dann strömt das Rauchgas durch die Charge und den ersten Schwenkrost 8 und erhitzt dieselben. Nach einer vorgegebenen Zeit schwenkt der erste Schwenkrost 8 nach unten und entlädt die Charge auf den darunter liegenden zweiten Schwenkrost 8' der zweiten Kammer 10. Dort wird die Charge weiter erhitzt, während der erste Schwenkrost 8 frei für die nächste Charge ist. Durch Schwenken des zweiten Schwenkrostes 8' gelangt die Charge in die dritte Kammer 11 und von dort über die Öffnung 14 in das Transportrohr 15. In diesem wird die Charge durch den Transportschieber 19 zur Mündung 17 und nach öffnen des Verschlusses 18 in den EAF 1 gefördert.

Durch die Vorwärmung der Charge mittels Rauchgas kontrollierter Zusammensetzung werden der Energiebedarf des EAF und dessen Schmelzzeiten drastisch vermindert. Dazu trägt auch die quasi kontinuierliche Chargierung durch den Transportschieber bei, die eine "Eisbergbildung" in der Schmelze sicher verhindert.

### Bezugszeichenliste

- 1: Elektrolichtbogenofen (EAF)
- 2: erste Verbindungsleitung
- 3: oberes Ende
- 4: Vorwärmschacht
- 5: Einfülldeckel
- 6: Schrägaufzug
- 7: Ladewagen
- 8: erster Schwenkrost
- 8': zweiter Schwenkrost
- 9: erste Kammer
- 10: zweite Kammer
- 11: dritte Kammer
- 13: unteres komisches Ende
- 14: Öffnung
- 15: Transportrohr
- 16: Schmelzspiegel
- 17: Mündung
- 18: Verschluss
- 19: Transportschieber
- 20: Unterdruckquelle
- 21: zweite Verbindungsleitung
- 22: Gasbrenner

## Patentansprüche

1. Verfahren zum Vorwärmen und zum kontinuierlichen Einbringen einer DRI-Charge (Direct Reduced Iron), vorzugsweise einer heißbrikettierten DRI-Charge (HBI, Hot Briquetted Iron) in einen Elektrolichtbogenofen (EAF), **dadurch gekennzeichnet, dass** die DRI-Charge in einen neben dem Elektrolichtbogenofen (1) angeordneten vertikalen Vorwärmschacht (4) an dessen oberem Ende (3) eingefüllt und mittels Schwerkrafttransport mit gesteuerter Verweilzeit zu dessen unterem Ende (13) gefördert und dabei im Gleichstrom mit Rauchgas des Elektrolichtbogenofens (1) vorgewärmt wird, wobei zur Vermeidung einer Rückoxidation des DRI der Sauerstoffgehalt des Rauchgases kontrolliert und durch Zugabe von reduzierendem Abgas mindestens eines Gasbrenners (22) auf einen gewünschten niedrigen Sauerstoffgehalt eingestellt wird, wonach die DRI-Charge mit einer Transportvorrichtung (15,19) mit Transportschieber (19) kontrolliert zu einer oberen Öffnung (17) des Elektrolichtbogenofens (1) kontinuierlich gefördert wird.

## Claims

1. A method for preheating and continuously introducing a DRI charge (Direct Reduced Iron), preferably a hot briquetted DRI charge (HBI, Hot Briquetted Iron), into an electric arc fumace (EAF), **characterized by** the fact that the DRI charge is filled into the upper end (3) of a vertical preheating shaft (4) that is arranged adjacent to the electric arc furnace (1) and conveyed to its lower end (13) with controlled dwell time by means of gravity transport, wherein the charge is preheated in a cocurrent with the flue gas of the electric arc furnace (1), wherein the oxygen content of the flue gas is controlled in order to prevent reoxidation of the DRI, wherein a desired low oxygen content is adjusted by adding reduced exhaust gas of at least one gas burner (22), and wherein the DRI charge is then continuously transported to an upper opening (17) of the electric arc furnace (1) in a controlled fashion by means of a transport device (15, 19) with a transport slide (19).

## Revendications

1. Procédé de préchauffage et d'apport en continu d'une charge de fer préréduit (ou DRI= Direct Reduced Iron) de préférence dans une charge de fer préréduit aggloméré à chaud (ou HBI, Hot Briquetted Iron) dans un four à arc électrique (FAE), **caractérisé en ce que** la charge de fer préréduit est versée dans un puits de préchauffage (4) vertical disposé près du four à arc électrique (1) à l'extrémité supérieure (3) de celui-ci et est acheminée par transport par force de gravité avec un temps d'attente commandé vers son extrémité inférieure (13) et est en même temps préchauffée en courant continu avec du gaz de fumée du four à arc électrique (1), la teneur en oxygène du gaz de fumée étant contrôlée et fixée à une teneur en oxygène désirée de faible niveau en ajoutant du gaz d'échappement réduit d'au moins un brûleur à gaz (22) pour éviter une réoxydation du fer préréduit, après quoi la charge de fer préréduit est transportée en continu grâce à un dispositif de transport (15, 19) comportant des tiroirs de transport (19) vers une ouverture supérieure (17) du four à arc électrique (1).
